(19) Europäisches Patentamt / European Patent Office / Office européen des brevets

(11) **EP 4 382 202 A1**

(12) **EUROPEAN PATENT APPLICATION**
published in accordance with Art. 153(4) EPC

(43) Date of publication:
**12.06.2024 Bulletin 2024/24**

(21) Application number: **22853363.4**

(22) Date of filing: **29.07.2022**

(51) International Patent Classification (IPC):
**B01J 27/22** (2006.01)   **B01J 23/46** (2006.01)
**B01J 21/18** (2006.01)   **B01J 35/02** (2006.01)
**B01J 35/00** (2006.01)   **B01J 37/04** (2006.01)
**B01J 37/08** (2006.01)   **C25B 1/04** (2021.01)
**C25B 11/081** (2021.01)

(52) Cooperative Patent Classification (CPC):
**B01J 21/18; B01J 23/46; B01J 27/22; B01J 35/00; B01J 35/30; B01J 37/04; B01J 37/08; C25B 1/04; C25B 11/081; Y02E 60/36**

(86) International application number:
**PCT/KR2022/011176**

(87) International publication number:
**WO 2023/013985 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2021 KR 20210101415**
**25.03.2022 KR 20220037212**

(71) Applicant: **Kyungpook National University Industry-Academic Cooperation Foundation Daegu 41566 (KR)**

(72) Inventors:
• **CHOI, Sang Il**
  **Daegu 41566 (KR)**
• **KIM, Jeong Hyeon**
  **Daegu 41566 (KR)**
• **KIM, Hee Jin**
  **Daegu 41566 (KR)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(54) **RUTHENIUM-BASED NANO-CATALYST FOR HYDROGEN GENERATION REACTION, PREPARATION METHOD THEREFOR, HYDROGEN GENERATION ELECTRODE, AND WATER ELECTROLYSIS SYSTEM**

(57) The present disclosure provides a ruthenium-based nano-catalyst for a hydrogen generation reaction having excellent catalytic activity and efficiency by the catalyst surface structure, a method for preparing the same, a hydrogen generation electrode and a water electrolysis system.

【FIG. 16】

EP 4 382 202 A1

**Description**

**Technical Field**

The present specification claims priority to and the benefits of Korean Patent Application No. 10-2021-0101415, filed with the Korean Intellectual Property Office on August 2, 2021, and Korean Patent Application No. 10-2022-0037212, filed with the Korean Intellectual Property Office on March 25, 2022, the entire contents of which are incorporated herein by reference.

The present disclosure relates to a ruthenium-based nano-catalyst for a hydrogen generation reaction, a method for preparing the same, a hydrogen generation electrode and a water electrolysis system. In particular, the present disclosure relates to a ruthenium-based nano-catalyst for a hydrogen generation reaction having excellent catalytic activity and efficiency, a method for preparing the same, a hydrogen generation electrode and a water electrolysis system.

**Background of the invention**

Metastable crystal structures, which are different from thermodynamic structures, are receiving much intention since they are expected to have preferred properties in the fields of catalysis, magnetism, photonics and biomedicine. Recently, new cubic-close-packed ruthenium ($Ru_{ccp}$) nanocrystals were discovered, and a high yield production method therefor was studied. With the successful synthesis, $Ru_{ccp}$ was able to be used as a better nano-catalyst for CO oxidation, water electrolysis and $N_2$ reduction compared to thermodynamic hexagonal-close-packed ruthenium ($Ru_{hcp}$).

Meanwhile, surface modification is an interesting topic from the perspective of catalysts and electrocatalysts, however, surface reconstruction by phase transition has received little attention in related fields so far. Since a phase transition of ruthenium crystal structure from ccp to hcp is an exothermic reaction, the surface of $Ru_{ccp}$ is able to release a large amount of energy in a limited area in a short phase transition time. There are needs for nano-catalyst surface modification technology capable of improving catalytic activity using such energy in a limited surface area.

**BRIEF DESCRIPTION OF THE INVENTION**

**Technical Problem**

The technical object to be achieved by the present disclosure is to provide a ruthenium-based nano-catalyst for a hydrogen generation reaction having excellent catalytic activity and efficiency depending on the catalyst surface structure, a method for preparing the same, a hydrogen generation electrode and a water electrolysis system.

However, objects to be addressed by the present disclosure are not limited to the object mentioned above, and other objects not mentioned will be clearly appreciated by those skilled in the art from the following description.

**Technical Solution**

One aspect of the present disclosure provides a ruthenium-based nano-catalyst for a hydrogen generation reaction, the nano-catalyst including: a carbon support; and ruthenium nanoparticles having a hexagonal-close-packed (hcp) crystal structure loaded on the carbon support and including a ruthenium carbide layer on the outer surface.

One aspect of the present disclosure provides a method for preparing the ruthenium-based nano-catalyst for a hydrogen generation reaction, the method including: stirring a dispersion including a solvent, a ruthenium precursor and a carbon support to prepare a nano-catalyst precursor in which ruthenium nanoparticles having a cubic-close-packed (ccp) crystal structure are loaded on the carbon support; and heat treating the nano-catalyst precursor to phase transform the ruthenium nanoparticles having a cubic-close-packed crystal structure to a hexagonal-close-packed (hcp) crystal structure.

One aspect of the present disclosure provides a hydrogen generation electrode including the ruthenium-based nano-catalyst for a hydrogen generation reaction.

One aspect of the present disclosure provides a water electrolysis system including the hydrogen generation electrode.

**Advantageous Effects**

A ruthenium-based nano-catalyst for a hydrogen generation reaction according to one embodiment of the present disclosure can have excellent catalytic activity by including ruthenium nanoparticles including a ruthenium carbide layer on the surface.

The ruthenium-based nano-catalyst for a hydrogen generation reaction according to one embodiment of the present disclosure can have excellent hydrogen generation reaction efficiency by having a low overpotential of the hydrogen generation reaction.

The ruthenium-based nano-catalyst for a hydrogen generation reaction according to one embodiment of the present disclosure has excellent hydrogen generation reaction activity based on mass, and can have excellent catalytic efficiency by having a high turnover frequency.

A method for preparing the ruthenium-based nano-catalyst for a hydrogen generation reaction according to one embodiment of the present disclosure is capable of providing a highly efficient ruthenium-based nano-catalyst for a hydrogen generation reaction using a simple method.

The method for preparing the ruthenium-based nano-catalyst for a hydrogen generation reaction according to one embodiment of the present disclosure changes a ruthenium particle crystal structure through a phase transition of the crystal structure and can provide a ruthenium-based nano-catalyst for a hydrogen generation reaction having improved efficiency and activity.

A hydrogen generation electrode according to one embodiment of the present disclosure includes the ruthenium-based nano-catalyst for a hydrogen generation reaction having excellent catalytic activity and efficiency, and therefore, can be used in mass production of hydrogen by generating a large amount of hydrogen even with relatively low electrical energy.

A water electrolysis system according to one embodiment of the present disclosure includes the hydrogen generation electrode, and can mass produce hydrogen by decomposing water in an alkaline condition.

Effects of the present disclosure are not limited to the above-described effects, and effects not mentioned will be clearly appreciated by those skilled in the art from the present specification.

**Brief Description of Drawings**

FIG. 1a shows TEM and HRTEM images of nano-catalyst surfaces of Preparation Example 1, Preparation Example 2, Example 1 and Comparative Example 1.

FIG. 1b shows TEM and HRTEM images of nano-catalyst surfaces of Reference Example and Comparative Example 2.

FIG. 1c shows low-magnification TEM images of nano-catalysts of Preparation Example 1, Preparation Example 2, Reference Example, Example 1, Comparative Example 1 and Comparative Example 2.

FIG. 2a shows XRD patterns of Preparation Example 1, Preparation Example 2, Example 1 and Comparative Example 1.

FIG. 2b shows XRD patterns of Reference Example and Comparative Example 2.

FIG. 3a shows results of time and temperature-dependent thermogravimetric analysis on nano-catalysts of Preparation Example 1, Preparation Example 2, Reference Example, Example 1, Comparative Example 1 and Comparative Example 2.

FIG. 3b shows results of (a) thermogravimetric analysis and (b) differential scanning calorimetry analysis on a nano-catalyst of Preparation Example 1 under nitrogen gas.

FIG. 4 shows in-situ HRTEM images of a nano-catalyst of Preparation Example 1 at 250°C, 300°C, 325°C, 350°C, 375°C, 400°C, 450°C or 500°C, changes in the lattice spacing depending on the temperature from each drawing, an angle between an virtual horizontal line and a $Ru_{ccp}(111)$ $(\alpha)$ or $Ru_{hcp}$ (002) $(\beta)$ direction, and a diagram schematizing a phase transition of the Ru crystal structure.

FIG. 5 shows results of in-situ high temperature XRD analysis on a nano-catalyst of Preparation Example 1 in a temperature range of 200°C to 500°C.

FIG. 6a shows XPS spectra in a Ru $3d_{5/2}$ region of nano-catalysts of Preparation Example 1, Preparation Example 2, Reference Example, Example 1, Comparative Example 1 and Comparative Example 2.

FIG. 6b shows XPS spectra in a N 1s region of nano-catalysts of Preparation Example 1, Preparation Example 2, Reference Example, Example 1, Comparative Example 1 and Comparative Example 2.

FIG. 7a shows HRPES spectra and graphs of RuC ratio with respect to total Ru at different photon energies (PE) and probing depths ($3\lambda$) in a Ru $3d_{5/2}$ region of nano-catalysts of Example 1 and Comparative Example 1.

FIG. 7b shows HRPES spectra and graphs of C $sp^2$ ratio with respect to total C at a photon energy (PE) of 512 eV in a C 1s region of nano-catalysts of Example 1 and Comparative Example 1.

FIG. 8 shows a high-resolution TEM image, an enlarged view of the black dotted rectangular portion of the TEM image, and a distance-dependent intensity profile of the white solid rectangular portion of the TEM image of each nano-catalyst of Example 1 and Comparative Example 1.

FIG. 9a shows Raman spectra and $I_D/I_G$ ratios of nano-catalysts of Preparation Example 1, Preparation Example 2, Example 1 and Comparative Example 1.

FIG. 9b shows Raman spectra of nano-catalysts of Reference Example and Comparative Example 2.

FIG. 10 shows Cu UPD curves of Example 2 and Comparative Examples 3 to 7.

FIG. 11a shows HER polarization curves, Tafel plots derived from the HER polarization curves, electrochemical impedance spectra measured at a constant potential of -0.05 V, graphs presenting a relationship between a turnover frequency and the measured potential, and graphs comparing values of overpotential at 50 mA/cm$^2$, Tafel slope ($b$), exchange current density ($j_0$), charge transfer resistance ($R_{ct}$) and turnover frequency at -50 mV of Example 2 and Comparative Examples 3 to 7.

FIG. 11b shows HER polarization curves of Example 2 and Comparative Examples 3 to 7.

FIG. 12 shows HER polarization curves of working electrodes of Example 2, Comparative Example 3, Comparative Example 4, Comparative Example 5, Comparative Example 6 and Comparative Example 7 before and after 5000 cycles.

FIG. 13 shows polarization curves of Example 2 and Comparative Example 3 in a H$_2$SO$_4$ electrolyte.

FIG. 14 shows polarization curves after poisoning nano-catalysts of Example 2, Comparative Example 3, Comparative Example 4 and Comparative Example 5.

FIG. 15 shows TEM image and XRD pattern of a nano-catalyst of Example 1-1, and HER polarization curve (corrected based on geometric surface area using ECSA of Experimental Example 9) and Tafel plot of Example 2-1.

FIG. 16 is a diagram showing, by summarizing what is identified in Experimental Examples 5, 7 and 12, a crystal phase transition of ruthenium according to a method for preparing a ruthenium-based nano-catalyst for a hydrogen generation reaction according to one embodiment of the present disclosure and an improvement in the hydrogen generation reaction activity effect resulting therefrom.

## Detailed Description of the Invention

In the present specification, a description of a certain part "including" certain constituents means capable of further including other constituents, and does not exclude other constituents unless particularly stated on the contrary.

Throughout the present specification, a description of a certain member being placed "on" another member includes not only a case of the certain member being in contact with the another member but a case of still another member being present between the two members.

Throughout the present specification, a unit "parts by weight" may mean a ratio of weight between each component.

Throughout the present specification, "A and/or B" means "A and B, or A or B".

Hereinafter, the present disclosure will be described in more detail.

One embodiment of the present disclosure provides a ruthenium-based nano-catalyst for a hydrogen generation reaction, the nano-catalyst including: a carbon support; and ruthenium nanoparticles having a hexagonal-close-packed (hcp) crystal structure loaded on the carbon support and including a ruthenium carbide layer on the outer surface.

The ruthenium-based nano-catalyst for a hydrogen generation reaction according to one embodiment of the present disclosure may have excellent catalytic activity by including ruthenium nanoparticles including a ruthenium carbide layer on the surface, may have excellent hydrogen generation reaction efficiency by having a low overpotential of the hydrogen generation reaction, may have excellent hydrogen generation reaction activity based on mass, and may have excellent catalytic efficiency by having a high turnover frequency.

According to one embodiment of the present disclosure, the carbon support is for supporting the nano-catalyst, and may perform a role of, in the process for preparing the ruthenium-based nano-catalyst for a hydrogen generation reaction, supplying carbon due to energy generated in the reaction of crystal structure phase transition of the ruthenium-based nanoparticles, and allowing the ruthenium and the carbon to react to form ruthenium carbide.

According to one embodiment of the present disclosure, the carbon support is not particularly limited, by may include one or more types of ketjen black, carbon black, graphene, carbon nanotubes and Vulcan XC-72R. However, the carbon support is not limited to those listed above, and carbon supports used in the art may be used.

According to one embodiment of the present disclosure, the crystal structure of the ruthenium nanoparticles may be a hexagonal-close-packed (hcp) crystal structure. The hexagonal-close-packed crystal structure may mean a crystal structure in which two atomic arrangement layers are repeatedly stacked in the form of A-B-A-B-.... The ruthenium nanoparticles may have excellent catalytic efficiency by having a hexagonal-close-packed crystal structure.

According to one embodiment of the present disclosure, the hexagonal-close-packed (hcp) crystal structure of the ruthenium nanoparticles may be formed by a crystal structure phase transition from a cubic-close-packed (ccp) crystal structure during the preparation process. Specifically, the crystal structure of the ruthenium nanoparticles may be formed to a hexagonal-close-packed (hcp) crystal structure from an existing cubic-close-packed (ccp) crystal structure due to a crystal structure phase transition caused by atomic layer slippage.

The cubic-close-packed (ccp) crystal structure may mean a crystal structure in which three atomic arrangement layers are repeatedly stacked in the form of A-B-C-A-B-C-.... As will be described later, in the method for preparing the ruthenium-based nano-catalyst for a hydrogen generation reaction according to one embodiment of the present disclosure, the crystal structure may change to a form in which two atomic arrangement layers are repeated as the atomic layer slips in the existing cubic-close-packed (ccp) crystal structure, and such a phase transition may result in a hexagonal-close-packed (hcp) crystal structure.

According to one embodiment of the present disclosure, the ruthenium nanoparticles may have an average size of 2 nm to 20 nm. Specifically, the ruthenium nanoparticles may have an average size of 2 nm to 15 nm, 2 nm to 10 nm, 2 nm to 7 nm, 2 nm to 5 nm, 3 nm to 5 nm, 2 nm to 4 nm, or 3 nm to 4 nm. When the average size of the ruthenium nanoparticles satisfies the above-mentioned range, the surface is sufficiently wide, resulting in an increase in the number of reaction active sites as a catalyst, and catalytic efficiency of the hydrogen generation reaction may be excellent. In addition, as the size of the ruthenium nanoparticles decreases, the surface area increases, resulting in an increase in the catalytic activity site, and as a result, catalytic activity may increase.

According to one embodiment of the present disclosure, the ruthenium-based nano-catalyst for a hydrogen generation reaction includes a ruthenium carbide layer on the outer surface. The ruthenium carbide layer may improve catalytic activity by including ruthenium carbide. The ruthenium carbide layer may be formed by ruthenium on the outer surface of the nanoparticles reacting with carbon penetrating into a certain depth from the outer layer during the process for preparing the ruthenium-based nano-catalyst for a hydrogen generation reaction.

According to one embodiment of the present disclosure, the ruthenium carbide layer may include $RuC_x$ ($0<x\leq1$). $RuC_x$ included in the ruthenium carbide layer may be formed by reacting at an atomic number ratio of less than one carbon per Ru atom. By the ruthenium carbide layer including $RuC_x$, the ruthenium-based nano-catalyst for a hydrogen generation reaction may have excellent catalytic activity and efficiency.

According to one embodiment of the present disclosure, the ruthenium carbide layer may be uniformly formed on the outer surface of the ruthenium nanoparticles. Accordingly, activity distribution of the nano-catalyst may be uniform, and catalytic activity may be excellent as well.

According to one embodiment of the present disclosure, $I_D/I_G$ may be from 1.30 to 1.50 in the Raman spectrum of the ruthenium-based nano-catalyst for a hydrogen generation reaction. In the Raman spectrum, $I_D/I_G$ refers to a peak intensity ratio of D-band and G-band of the carbon peak. The G-band is an $E_{2g}$ mode having a stretching vibration of $sp^2$ C-C bond, and the D-band is associated with defects caused by disordered phase and lattice mismatch in the graphite layer. Accordingly, through the intensity ratio between the D-band and the G-band, the ratio of amorphous (defect) elements of aligned graphite may be identified. In other words, amorphousness is higher as the $I_D/I_G$ value is higher. When the $I_D/I_G$ of the ruthenium-based nano-catalyst for a hydrogen generation reaction satisfies the above-mentioned range, amorphousness is high and crystallinity, that is, a graphite structure of carbon, is low, and this may mean that catalytic activity is excellent by including the ruthenium carbide layer.

According to one embodiment of the present disclosure, the ruthenium-based nano-catalyst for a hydrogen generation reaction may have a hydrogen generation reaction overpotential of 50 mV to 115 mV, 50 mV to 110 mV or 50 mV to 100 mV at current density of 50 mA/cm². When the hydrogen generation reaction overpotential is in the above-mentioned range, the hydrogen generation reaction is able to be progressed even with lower electrical energy, and energy efficiency of the catalyst may be excellent.

In addition, the hydrogen generation reaction overpotential may be measured using a linear sweep voltammetry (LSV) method in a three-electrode system employing an electrode prepared by depositing a catalyst dispersion obtained by dispersing the ruthenium-based nano-catalyst for a hydrogen generation reaction according to one embodiment of the present disclosure on an electrode support as a working electrode.

According to one embodiment of the present disclosure, the ruthenium-based nano-catalyst for a hydrogen generation reaction may have hydrogen generation reaction activity of 2.00 A/mg to 3.00 A/mg per ruthenium mass at an overpotential of 100 mV. The hydrogen generation reaction activity per mass may be a value obtained by dividing the exchange current density value, which is measured by the hydrogen generation reaction, by the mass of ruthenium included in the catalyst used and correcting the obtained value. When having the hydrogen generation reaction activity per ruthenium mass in the above-mentioned range, the ruthenium-based nano-catalyst for a hydrogen generation reaction is capable of generating a large amount of hydrogen even when a small amount of the catalyst is used, thereby is economical, and catalytic efficiency may be excellent.

According to one embodiment of the present disclosure, the ruthenium-based nano-catalyst for a hydrogen generation reaction may have a hydrogen generation reaction turnover frequency (TOF) of 1.5 $H_2$/s to 5.0 $H_2$/s at an overpotential of 50 mV. The hydrogen generation reaction turnover frequency is an indicator representing the amount of hydrogen generated per unit time, and may be calculated using the amount of current generated by the hydrogen generation reaction and the number of catalytic active sites as in Examples to be described later.

When having a hydrogen generation reaction turnover frequency in the above-mentioned range, the ruthenium-based nano-catalyst for a hydrogen generation reaction according to one embodiment of the present disclosure may produce a relatively large amount of hydrogen within the same time, and when hydrogen is produced using the ruthenium-based nano-catalyst for a hydrogen generation reaction, hydrogen productivity may be excellent.

According to one embodiment of the present disclosure, the method for preparing the ruthenium-based nano-catalyst for a hydrogen generation reaction may include: stirring a dispersion including a solvent, a ruthenium precursor and a carbon support to prepare a nano-catalyst precursor in which ruthenium nanoparticles having a cubic-close-packed (ccp) crystal structure are loaded on the carbon support; and heat treating the nano-catalyst precursor to phase transform the ruthenium nanoparticles having a cubic-close-packed crystal structure to a hexagonal-close-packed (hcp) crystal structure.

The method for preparing the ruthenium-based nano-catalyst for a hydrogen generation reaction according to one embodiment of the present disclosure is capable of providing a highly efficient ruthenium-based nano-catalyst for a hydrogen generation reaction using a simple method, and changes a ruthenium particle crystal structure through a phase transition of the crystal structure and is capable of providing a ruthenium-based nano-catalyst for a hydrogen generation reaction having improved efficiency and activity.

Hereinafter, each step of the method will be specifically described in chronological order.

According to one embodiment of the present disclosure, a dispersion including a solvent, a ruthenium precursor and a carbon support may be prepared first. Specifically, a dispersion may be prepared by introducing and dispersing a ruthenium precursor and a carbon support into a solvent.

According to one embodiment of the present disclosure, the ruthenium precursor may include ruthenium acetylacetonate. The ruthenium precursor may form ruthenium nanoparticles having a cubic-close-packed (ccp) crystal structure on the carbon support, and the ruthenium precursor may be ruthenium acetylacetonate.

According to one embodiment of the present disclosure, the carbon support is not particularly limited, by may include one or more types of ketjen black, carbon black, graphene, carbon nanotubes and Vulcan XC-72R. However, the carbon support is not limited to those listed above, and carbon supports used in the art may be used.

According to one embodiment of the present disclosure, the solvent may include a glycol-based solvent. Specifically, the glycol-based solvent may include one or more types of triethylene glycol, ethylene glycol, tetraethylene glycol and diethylene glycol. The glycol-based solvent may be used in one type as a single solvent, or may also be used as a mixed solvent including two or more types.

According to one embodiment of the present disclosure, the dispersion may include the ruthenium precursor in an amount of greater than 0 mg and less than or equal to 10 mg with respect to 1 ml of the solvent. Specifically, the dispersion may include 0.1 mg to 10 mg, 0.5 mg to 8 mg, 1 mg to 5 mg, 2 mg to 5 mg, 3 mg to 5 mg or 3 mg to 4 mg of the ruthenium precursor with respect to 1 ml of the solvent. When the ruthenium precursor is included in a content within the above-mentioned range, proper-sized ruthenium nanoparticles having a cubic-close-packed (ccp) crystal structure may be formed.

According to one embodiment of the present disclosure, the ruthenium precursor and the carbon support may have a weight ratio of 1:0.01 to 1:3. Specifically, the ruthenium precursor and the carbon support may have a weight ratio of 1:0.01 to 1:2, 1:0.1 to 1:2, 1:0.1 to 1:1, 1:0.1 to 1:0.8, 1:0.1 to 1:0.5, 1:0.2 to 1:0.5, 1: 0.3 to 1:0.5 or 1:0.3 to 1:0.4. When the ruthenium precursor and the carbon support are included in a weight ratio within the above-mentioned range, ruthenium nanoparticles having a proper size may be loaded in a proper amount on the carbon support.

According to one embodiment of the present disclosure, a nano-catalyst precursor in which ruthenium nanoparticles having a cubic-close-packed (ccp) crystal structure are loaded on the carbon support is prepared next by stirring the dispersion. Specifically, a nano-catalyst precursor in which ruthenium nanoparticles having a cubic-close-packed (ccp) crystal structure are loaded on the carbon support may be prepared by reacting the dispersion for a certain period of time under stirring.

According to one embodiment of the present disclosure, the stirring may be performed for 5 hours to 10 hours, 5 hours to 9 hours, 5 hours to 8 hours, 6 hours to 8 hours or 6 hours to 7 hours at a temperature of 100°C to 300°C, 100°C to 250°C, 150°C to 250°C or 200°C to 250°C. The time and the temperature at which the stirring is performed may be selected depending on the ruthenium precursor type, and when the stirring temperature increases, the stirring time may be reduced. When the stirring is performed at temperature and time within the above-mentioned range, ruthenium nanoparticles having a cubic-close-packed (ccp) crystal structure may be formed from the ruthenium precursor during the stirring process, and a nano-catalyst precursor in which such ruthenium nanoparticles are loaded on the carbon support may be obtained.

According to one embodiment of the present disclosure, the method of stirring is not particularly limited, and for example, magnetic stirring may be performed.

According to one embodiment of the present disclosure, the nano-catalyst precursor may be obtained by centrifugation after the stirring. The centrifugation may be performed at 2000 rpm to 5000 rpm, for example 3000 rpm, and the solid obtained by the centrifugation is washed 1 to 10 times using a solvent such as ethanol, and then dried under the argon atmosphere to obtain the nano-catalyst precursor.

According to one embodiment of the present disclosure, the nano-catalyst precursor is heat treated to phase transform the ruthenium nanoparticles having a cubic-close-packed crystal structure to a hexagonal-close-packed (hcp) crystal structure. Specifically, the ruthenium nanoparticles having a cubic-close-packed crystal structure may be phase transformed to a hexagonal-close-packed (hcp) crystal structure by heat treating the nano-catalyst precursor at a high temperature.

According to one embodiment of the present disclosure, heat energy applied in the heat treatment step may work on the atomic layer slippage of the ruthenium nanoparticles having a cubic-close-packed crystal structure, and energy is released during the phase transition process (exothermic phase transition) from the cubic-close-packed crystal structure to the hexagonal-close-packed crystal structure, which occurs by such atomic layer slippage. The released energy is able to dissociate carbon of the carbon support into an atomic unit, and the dissociated carbon atom penetrates inward from the ruthenium nanoparticle surface to form a ruthenium carbide layer on the ruthenium nanoparticle surface.

According to one embodiment of the present disclosure, preheating may be performed before the heat treatment step. Specifically, the preheating may be performed for 30 min to 2 hours at a temperature of 100°C to 200°C. The preheating may be performed to prevent problems such as loss of the catalyst in the sudden temperature change, and may be performed under a low-activity gas atmosphere, for example, under the nitrogen flow. When the preheating is performed under the nitrogen flow, the nitrogen flow rate may be from 50 cm$^3$/min to 200 cm$^3$/min.

According to one embodiment of the present disclosure, the heat treatment may be performed for 2 hours to 4 hours, for example, 3 hours at a temperature of 300°C to 1000°C, 350°C to 800°C, 400°C to 750°C, 500°C to 750°C or 600°C to 750°C. When the heat treatment is performed at temperature and time within the above-mentioned range, the crystal structure phase transition may be progressed smoothly and completely, and as a result, a ruthenium-based nano-catalyst for a hydrogen generation reaction having excellent catalytic activity and efficiency may be obtained.

According to one embodiment of the present disclosure, the heat treatment may be performed while, after raising the temperature to the above-mentioned temperature, maintaining the corresponding temperature. The temperature raise may be performed at a rate of 5°C/min to 20°C/min, for example, 10°C/min, and in order to prevent problems such as changes in the catalyst properties caused by a sudden temperature change such as preheating, the temperature is raised to the heat treatment temperature while slowly raising the temperature.

According to one embodiment of the present disclosure, the ruthenium-based nano-catalyst for a hydrogen generation reaction is obtained by cooling at room temperature after the heat treatment.

One embodiment of the present disclosure provides a hydrogen generation electrode including the ruthenium-based nano-catalyst for a hydrogen generation reaction.

The hydrogen generation electrode according to one embodiment of the present disclosure includes the ruthenium-based nano-catalyst for a hydrogen generation reaction having excellent catalytic activity and efficiency, and therefore, may be used in mass production of hydrogen by generating a large amount of hydrogen even with relatively low electrical energy.

According to one embodiment of the present disclosure, the hydrogen generation electrode may include an electrode support; and a catalyst layer provided on the electrode support, and including the ruthenium-based nano-catalyst for a hydrogen generation reaction.

According to one embodiment of the present disclosure, conductive materials such as glassy carbon may be used as the electrode support, however, the electrode support is not limited thereto, and metals, carbon-based materials and the like used as an electrode material in the art may be included.

According to one embodiment of the present disclosure, the catalyst layer may be formed by coating a catalyst dispersion including the ruthenium-based nano-catalyst for a hydrogen generation reaction on the electrode support, drying the result, and depositing the catalyst.

According to one embodiment of the present disclosure, the catalyst dispersion may further include a solvent and a binder as well as the ruthenium-based nano-catalyst for a hydrogen generation reaction. The solvent may include one or more types of water, alcohol-based solvents, ketone-based solvents and aprotic solvents, and the binder may include Nafion.

One embodiment of the present disclosure provides a water electrolysis system including the hydrogen generation electrode.

The water electrolysis system according to one embodiment of the present disclosure includes the hydrogen generation electrode, and is capable of mass producing hydrogen by decomposing water in a alkaline condition.

The water electrolysis system is a system capable of producing hydrogen and/or oxygen by electrolyzing water, and may be used to produce hydrogen, which recently has received attention as environmental-friendly energy.

The water electrolysis system according to one embodiment of the present disclosure is able to produce oxygen in an oxidation electrode through oxidizing hydroxide ions formed by water decomposition, and is also able to produce hydrogen in a reduction electrode through reducing hydrogen ions formed by water decomposition. As the reduction electrode, the hydrogen generation electrode according to one embodiment of the present disclosure may be used.

According to one embodiment of the present disclosure, the water electrolysis system may further include one or more types of an oxygen generation electrode, a separator, an electrolyte, a power supply, an oxygen collection unit, a hydrogen collection unit, a water supply unit and a control unit, and in addition to the above-listed constitutions, may further include equipment or constitutions generally provided for driving a water electrolysis system.

According to one embodiment of the present disclosure, the water electrolysis system may include an electrolyte, the electrolyte may be an acidic or alkaline electrolyte, and may preferably include a alkaline electrolyte. When a alkaline electrolyte such as an aqueous KOH solution is used, the water electrolysis system according to one embodiment of the present disclosure may have excellent water electrolysis efficiency and hydrogen production efficiency.

Hereinafter, the present disclosure will be described in detail with reference to examples in order to specifically describe the present disclosure. However, the examples according to the present disclosure may be modified to various different forms, and the scope of the present disclosure is not construed as being limited to the examples described below. The examples of the present specification are provided in order to more fully describe the present disclosure to those having average knowledge in the art.

## Materials Used

In the Examples to describe later, the following materials were used, and abbreviation and manufacturer of each material are described.

- Ruthenium(III) acetylacetonate (Ru(acac)$_3$, 97%): Sigma Aldrich
- Ruthenium(III) chloride (RuCl$_3$, Ru 50%): Sigma Aldrich
- Ethylene glycol (EG, 99%): Sigma Aldrich
- Triethylene glycol (TEG, 99%): Sigma Aldrich
- Ketjen black (KB) carbon: AkzoNobel
- Ethanol: Duksan Chemicals Co., Ltd.
- Potassium hydroxide (KOH, 99.98%): Alfa Aesar
- Potassium thiocyanate (KSCN, 99.0%): Samchun Chem.
- Commercial Ru/C: Premetek
- Commercial Pt/C: Alfa Aesar

## Preparation Example 1 (Ru$_{ccp}$/C)

After dispersing 16 mg of Ru(acac)$_3$ and 6 mg of KB carbon in 5 ml of TEG placed in a glass vial, the vial was kept in an oil bath at a temperature of 210°C for 6 hours under magnetic stirring. The resulting product was centrifuged at a speed of 3,000 rpm, and then the solid content was washed three times with ethanol and then dried under the argon atmosphere to obtain a nano-catalyst.

## Preparation Example 2 (Ru$_{hcp}$/C)

After dispersing 8 mg of RuCl$_3$ and 6 mg of KB in 5 ml of EG placed in a glass vial, the vial was kept in an oil bath at a temperature of 160°C for 6 hours under magnetic stirring. The resulting product was centrifuged at a speed of 3,000 rpm, and then the solid content was washed three times with ethanol and then dried under the argon atmosphere to obtain a nano-catalyst.

## Reference Example (Ru/C)

Commercial Ru/C was prepared as Reference Example.

## Example 1 (Ru$_{\Delta c \to h}$/C)

10 mg of the nano-catalyst prepared in Preparation Example 1 was preheated to 120°C for 1 hour under a nitrogen flow (100 cm$^3$/min), heated to 750°C at heating rate of 10°C/min, and then kept for 3 hours at the temperature of 750°C. After that, the resulting product was cooled at room temperature to obtain a nano-catalyst.

## Comparative Example 1 (Ru$_{\Delta hcp}$/C)

A nano-catalyst was obtained in the same manner as in Example 1, except that the nano-catalyst prepared in Preparation Example 2 was used instead of the nano-catalyst prepared in Preparation Example 1.

## Comparative Example 2 (ΔRu/C)

A nano-catalyst was obtained in the same manner as in Example 1, except that the commercial Ru/C prepared in Reference Example was used instead of the nano-catalyst prepared in Preparation Example 1.

**Experimental Example 1: TEM Image Analysis**

Each of the catalyst dispersions of Preparation Example 1, Preparation Example 2, Reference Example, Example 1, Comparative Example 1 and Comparative Example 2 was drop casted on a carboncoated Cu grid and dried under an ambient condition. Transmission electron microscope (TEM) images were taken using an HT-7100 microscope (HITACHI, Japan) operating at 100 kV, and high-resolution TEM (HRTEM) images were taken at KBSI (Daegu and Seoul) using Chemi-STEM technology-used JEM-2100F and FEI Double Cs corrected Titan3 G2 60-300 S/TEM device.

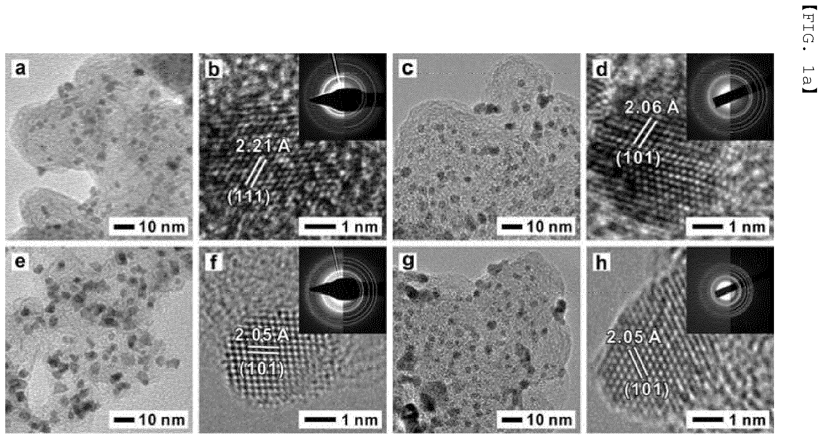

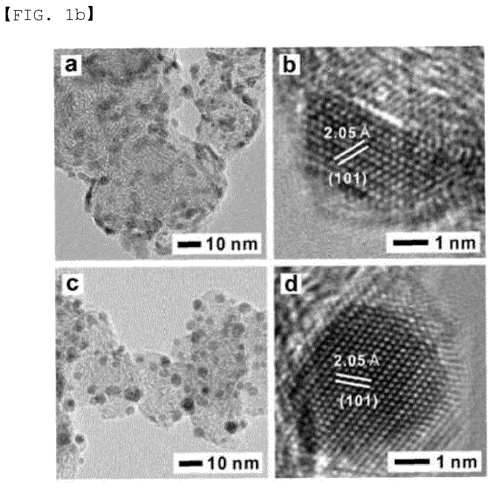

FIG. 1a shows TEM and HRTEM images of the catalyst surfaces of Preparation Example 1, Preparation Example 2, Example 1 and Comparative Example 1, and FIG. 1b shows TEM and HRTEM images of the catalyst surfaces of Reference Example and Comparative Example 2. Specifically, (a) of FIG. 1a shows a TEM image of the catalyst surface of Preparation Example 1, (b) of FIG. 1a shows an HRTEM image of the catalyst surface of Preparation Example 1, (c) of FIG. 1a shows a TEM image of the catalyst surface of Preparation Example 2, (d) of FIG. 1a shows an HRTEM image of the catalyst surface of Preparation Example 2, (e) of FIG. 1a shows a TEM image of the catalyst surface of Example 1, (f) of FIG. 1a shows an HRTEM image of the catalyst surface of Example 1, (g) of FIG. 1a shows a TEM image of the catalyst surface of Comparative Example 1, and (h) of FIG. 1a shows an HRTEM image of the catalyst surface of Comparative Example 1. In addition, (b), (d), (f) and (g) of FIG. 1a show SAED patterns as an inset drawing. (a) of FIG. 1b shows a TEM image of the catalyst surface of Reference Example, (b) of FIG. 1b shows an HRTEM image of the catalyst surface of Reference Example, (c) of FIG. 1b shows a TEM image of the catalyst surface of Comparative Example 2, and (d) of FIG. 1b shows an HRTEM image of the catalyst surface of Comparative Example 2.

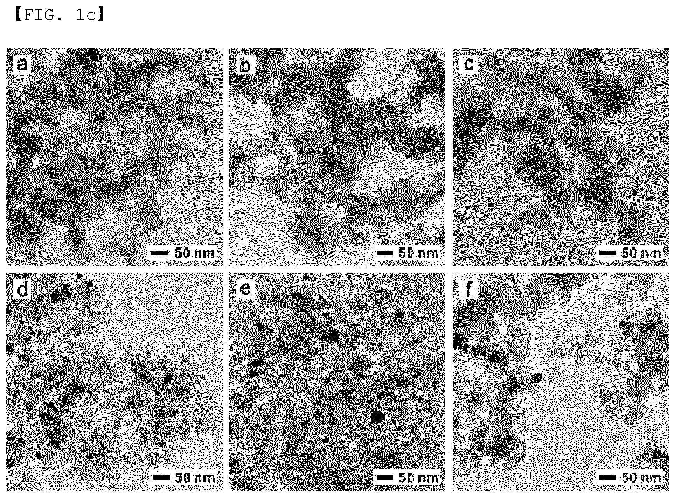

In addition, FIG. 1c shows low-magnification TEM images of Preparation Example 1, Preparation Example 2, Reference Example, Example 1, Comparative Example 1 and Comparative Example 2. Specifically, FIG. 1c shows low-magnification TEM images of (a) Preparation Example 1, (b) Preparation Example 2, (c) Reference Example, (d) Example 1, (e) Comparative Example 1 and (f) Comparative Example 2.

Referring to (a) and (c) of FIG. 1a, it can be identified that the nano-catalysts of Preparation Examples 1 and 2 are supported on the carbon support. In addition, referring to (b) and (d) of FIG. 1a, it can be identified that the nano-catalyst of Preparation Example 1 shows a lattice spacing of 2.21 Å corresponding to $Ru_{ccp}(111)$, and the nano-catalyst of Preparation Example 2 shows a lattice spacing of 2.06 Å corresponding to $Ru_{hcp}$ (101).

In addition, referring to (e) and (g) of FIG. 1a and FIG. 1c, it can be identified that the nano-catalysts of Example 1 and Comparative Example 1 were obtained by respectively annealing the nano-catalysts of Preparation Examples 1 and 2 as described above. It can be identified that, although the Ru-based nano-catalyst maintained its size while going through the annealing process, some aggregate as well.

Referring to (f) and (h) of FIG. 1a and the inset drawings, it can be identified that the nano-catalysts of Example 1 and Comparative Example 1 are all formed in a hcp crystal structure having a lattice spacing of 2.05 Å corresponding to $Ru_{hcp}(101)$. In other words, it indicates that the nano-catalyst of Preparation Example 1 undergoes a phase transition from a ccp crystal structure to a hcp crystal structure during the annealing process.

**Experimental Example 2: XRD Pattern Analysis**

X-ray diffraction (XRD) patterns of the nano-catalysts of Preparation Example 1, Preparation Example 2, Example 1 and Comparative Example 1 were obtained at KBSI (Daegu) with an X-ray diffractometer (PANalytical X'pert PRO-MPD/MRD) using Cu-Kα radiation (1.5414 Å) at 40 kV and 25 mA.

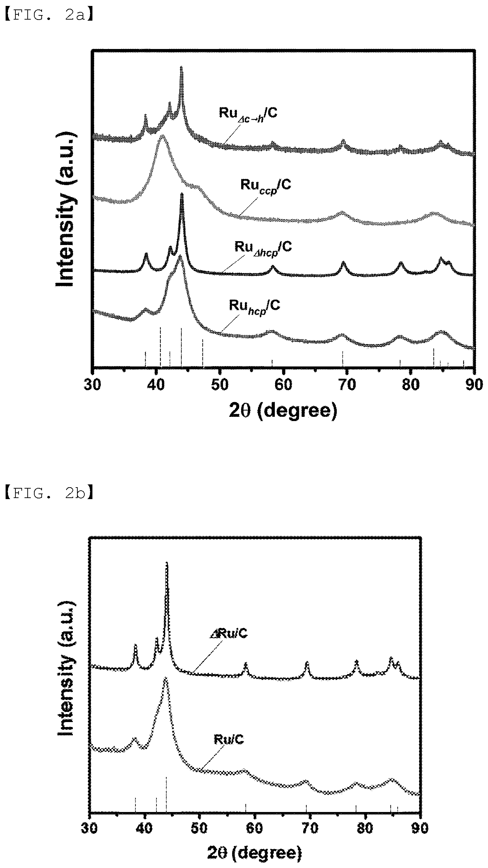

FIG. 2a shows XRD patterns of Preparation Example 1, Preparation Example 2, Example 1 and Comparative Example 1, and FIG. 2b shows XRD patterns of Reference Example and Comparative Example 2. Specifically, the vertical dash-double dotted line of FIG. 2a and FIG. 2b represents an hcp (JCPDS# 06-0663) structure of the Ru reference, and the vertical broken line represents a ccp (JCPDS #88-2333) structure of the Ru reference.

Referring to FIG. 2a, the XRD patterns show that, as identified in (b) and (d) of FIG. 1a, the nano-catalyst of Preparation Example 1 has a ccp structure, and the nano-catalyst of Preparation Example 2 has an hcp structure. In addition, when the nano-catalyst of Preparation Example 1 becomes the nano-catalyst of Example 1 through annealing, its crystal structure changes from ccp to hcp, and the shape of the XRD pattern changes, which corresponds to what is identified in (f) and (h) of FIG. 1a.

**Experimental Example 3: Average Particle Size of Nano-Catalyst**

Average sizes of the Ru nanoparticles loaded into the nano-catalysts of Preparation Examples 1 and 2 were determined using the following Scherrer equation.

$$\tau = \frac{K\lambda}{\beta \cos \theta}$$

$\beta$ is a peak width taken as a full width at half the maximum intensity of the peak in the XRD pattern (full width at half maximum), K is a constant taken as 0.94, $\lambda$ is an X-ray wavelength, $\tau$ is the particle average size, and $\theta$ is a Bragg angle.

The average sizes of the Ru nanoparticles loaded into the nano-catalysts of Preparation Examples 1 and 2 calculated using the equation were 3.6 nm and 4.2 nm, respectively.

**Experimental Example 4: Thermogravimetric Analysis (TGA)**

1.0 mg of each of the nano-catalysts of Preparation Example 1, Preparation Example 2, Reference Example, Example 1, Comparative Example 1 and Comparative Example 2 was placed in a ceramic crucible, heated from room temperature to 750°C at a rate of 21°C/minute, and while being kept for 2 hours at a temperature of 750°C, thermogravimetric analysis was performed using Q500 (TA Instruments, USA). During the thermogravimetric analysis process, the nano-catalyst was completely oxidized to $RuO_2$ and $CO_2$.

Using the result of thermogravimetric analysis, the amount of Ru loaded into the nano-catalyst was calculated using the following equation.

$$R_{Ru} \ (\%) = 100 \times w_{RuO2} \times 0.76 / w_{catalyst}$$

Herein, $R_{Ru}$ is a weight fraction (%) of Ru in the nano-catalyst, $w_{RuO2}$ is a weight (mg) of $RuO_2$ after the thermogravimetric analysis, $w_{catalyst}$ is a weight (1 mg) of each nano-catalyst before the thermogravimetric analysis, and 0.76 is a mass ratio of Ru included in $RuO_2$.

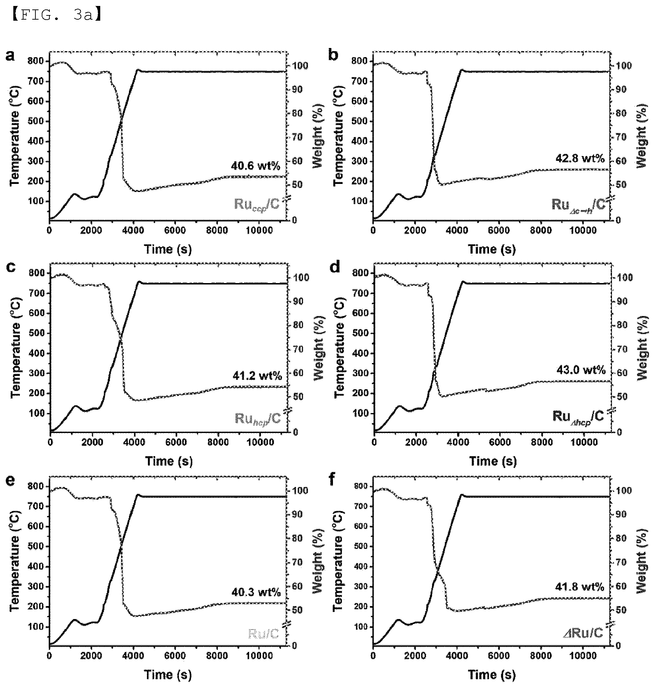

FIG. 3a shows the results of time and temperature-dependent thermogravimetric analysis on the nano-catalysts of (a) Preparation Example 1, (c) Preparation Example 2, (e) Reference Example, (b) Example 1, (d) Comparative Example 1 and (f) Comparative Example 2. In addition, the weight fraction of Ru calculated using the above-described equation is shown inside each drawing.

In addition, thermogravimetric analysis and TGA-differential scanning calorimetry (DSC) analysis were performed on the nano-catalyst of Preparation Example 1 under the same condition as the thermogravimetric analysis, except that nitrogen gas was flowed at a flow rate of 100 $cm^3$/minute.

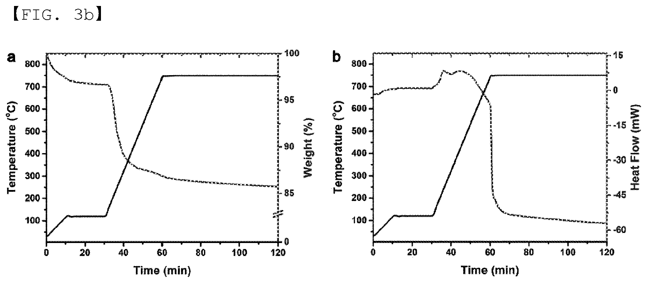

FIG. 3b shows the results of (a) thermogravimetric analysis and (b) differential scanning calorimetry analysis on the nano-catalyst of Preparation Example 1 under the nitrogen gas.

Referring to FIG. 3b, it can be identified that the nano-catalyst of Preparation Example 1 generates heat while being converted from the ccp structure to the hcp structure. In other words, during the phase transition, energy released from the nano-catalyst of Preparation Example 1 to the surrounding carbon support may cause dissociation of carbon atoms from the support, and it can be identified that a $RuC_x$ phase is formed on the entire surface of the nano-catalyst of Example 1 due to the reaction with the dissociated carbon atoms.

**Experimental Example 5: In-Situ HRTEM and High Temperature XRD Analysis**

For the nano-catalyst of Preparation Example 1, in-situ HRTEM analysis was performed at KBSI (Jeonju) using a protochip TEM holder and thermal E-chip in an ARM-200F microscope (JEOL, Japan) after raising the temperature to 250°C, 300°C, 325°C, 350°C, 375°C, 400°C, 450°C or 500°C at a heating rate of 1°C/s, and then cooling at room temperature.

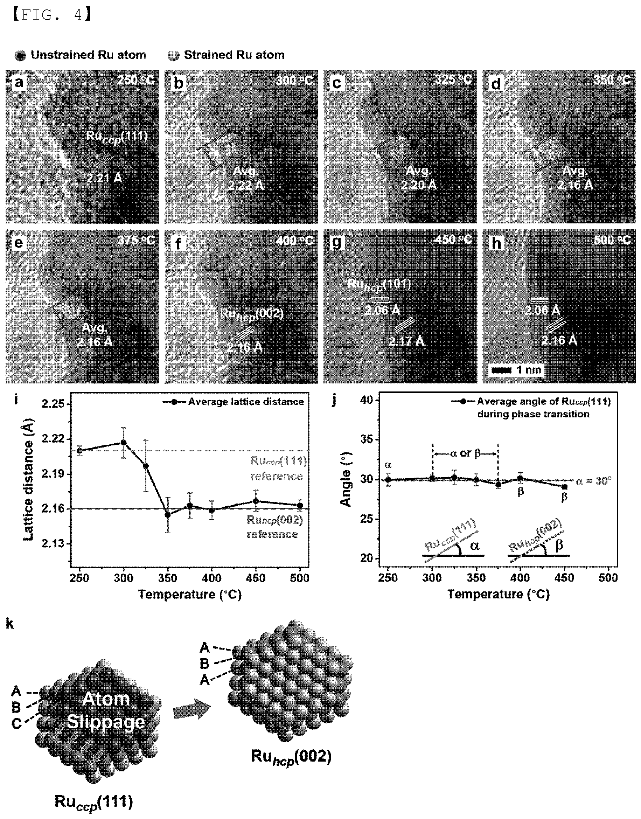

FIG. 4 shows in-situ HRTEM images of the nano-catalyst of Preparation Example 1 at (a) 250°C, (b) 300°C, (c) 325°C, (d) 350°C, (e) 375°C, (f) 400°C, (g) 450°C and (h) 500°C, (i) shows changes in the lattice spacing depending on the temperature from each drawing, (j) shows an angle between the virtual horizontal line and the $Ru_{ccp}$ (111) ($\alpha$) or $Ru_{hcp}$ (002) ($\beta$) direction, and (k) shows a diagram schematizing the phase transition of the Ru crystal structure. In addition, the scale bar in (h) of FIG. 4 is the size applied to the rest of the drawings.

Referring to (a) of FIG. 4, the nano-catalyst of Preparation Example 1 showed a lattice spacing of 2.21 Å, which corresponds to the $Ru_{ccp}$ (111) plane. However, referring to (b) of FIG. 4, the presence of strained atoms not matching the ccp structure is identified in the Ru lattice at the temperature of 300°C, and it can be identified that this continues up to the temperature of 400°C as shown in (c) to (f) of FIG. 4.

In addition, the strained atoms among these are rearranged into a $Ru_{hcp}$ crystal structure having a lattice spacing of 2.16 Å, corresponding to the $Ru_{hcp}$ (002) plane. Referring to (g) of FIG. 4, it can be identified that a completely oriented hcp lattice appears without other changes in the lattice distance except slightly at the corners. In addition, referring to (i) of FIG. 4, it can be identified that an average lattice spacing of Ru rapidly decreases from 2.21 Å to 2.16 Å in (b) to (d) of FIG. 4.

Referring to (j) of FIG. 4, it can be identified that, when the nano-catalyst of Preparation Example 1 undergoes a phase transition at a high temperature, the angle between the virtual horizontal line and the $Ru_{ccp}$ (111) or $Ru_{hcp}$ (002) plane does not change much. This indicates that the lattice direction of $Ru_{ccp}$ (111) or $Ru_{hcp}$ (002) is the same in the Ru nanocrystals during the phase transition process. As is well known, referring to (k) of FIG. 4, the ccp crystal structure and the hcp crystal structure of Ru are dense planes, and are types stacked in the order of A-B-C-A-B-C and A-B-A-B, respectively, in the stacking direction. Accordingly, the phase transition from the ccp crystal structure to the hcp crystal structure may be considered as forming the $Ru_{hcp}$ (002) plane due to 'slippage' of the $Ru_{ccp}$ (111) plane.

In addition, for the nano-catalyst of Preparation Example 1, XRD analysis was performed under the argon atmosphere using an X-ray diffractometer (X'Pert Pro-MPD, PANalytical, Netherlands) equipped with Cu-Kα radiation and a diffraction beam graphite monochromator. Specifically, in-situ high-temperature XRD analysis was performed by installing a high-temperature chamber (Anton Paar HTK-16) capable of in-situ high-temperature measurements under a controlled atmosphere, and measuring in the temperature range of 200°C to 500°C while keeping for 10 min at each temperature, and in the scan range (θ) of 20° to 90° at a scan rate of 7°/minute.

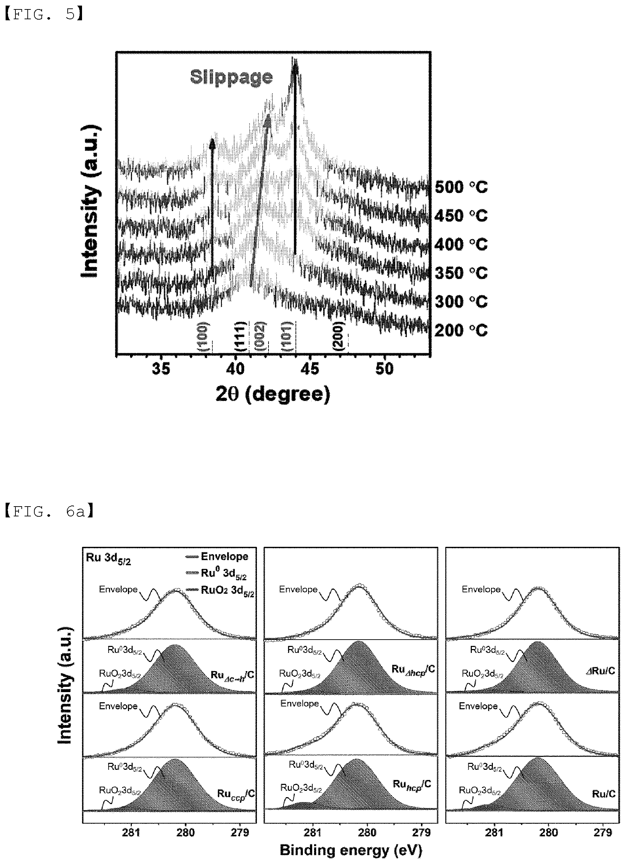

FIG. 5 shows the results of in-situ high-temperature XRD analysis on the nano-catalyst of Preparation Example 1 in the temperature range of 200°C to 500°C. The vertical broken line represents a hcp (JCPDS# 06-0663) structure of the Ru reference, and the vertical dash-double dotted line represents a ccp (JCPDS #88-2333) structure of the Ru reference.

Referring to FIG. 5, it can be identified that the $Ru_{ccp}$ (111) peak moves to the $Ru_{hcp}$ (002) having a larger angle. In addition, it can be identified that the $Ru_{ccp}$ peak disappears and a new $Ru_{hcp}$ peak gradually appears as the temperature increases. As a result of this analysis, an orthorhombic or monoclinic structure, which has been suggested as an intermediate step in the phase transition from ccp to hcp in previous research results, was not observed.

## Experimental Example 6: XPS Spectrum Analysis

For the nano-catalysts of Preparation Example 1, Preparation Example 2, Reference Example, Example 1, Comparative Example 1 and Comparative Example 2, X-ray photoelectron spectroscopy (XPS) analysis was performed at the National NanoFab Center (NNFC, Daejeon) using a Scientific ESCALAB 250Xi system (ThermoFisher, USA) with an Al Kα X-ray (1486.6 eV) light source.

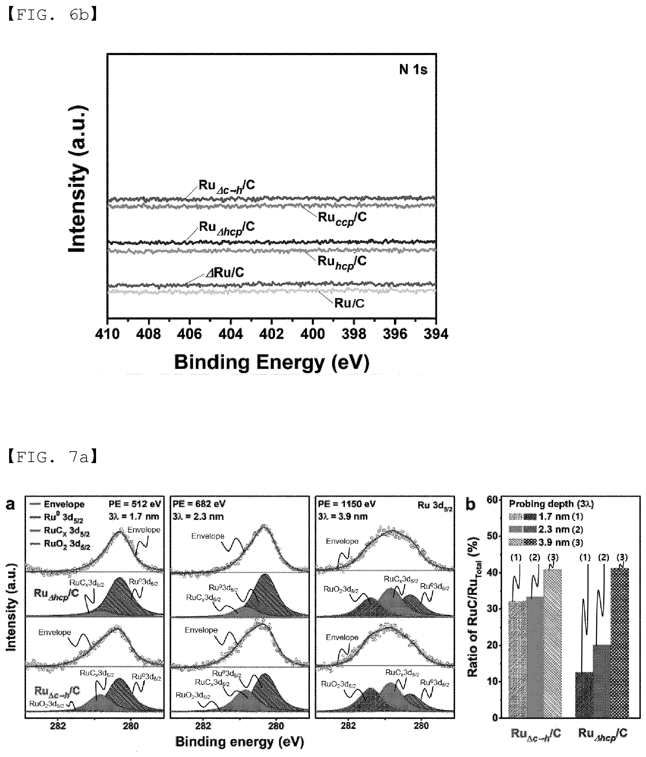

FIG. 6a shows XPS spectra in the Ru $3d_{5/2}$ region of the nano-catalysts of Preparation Example 1, Preparation Example 2, Reference Example, Example 1, Comparative Example 1 and Comparative Example 2, and FIG. 6b shows XPS spectra in the N 1s region of the nano-catalysts of Preparation Example 1, Preparation Example 2, Reference Example, Example 1, Comparative Example 1 and Comparative Example 2.

Referring to FIG. 6a, it can be identified that the nano-catalysts of Example 1 and Comparative Example 1 respectively show a higher Ru° ratio compared to the nano-catalysts of Preparation Example 1 and Preparation Example 2, and, although it is already known that a metal component ratio of a nano-catalyst increases after annealing, it can be identified that the nano-catalyst of Comparative Example 2 has a slightly decreased Ru° ratio compared to the nano-catalyst of Reference Example.

In addition, referring to FIG. 6b, it can be identified that no by-products are formed since a nitrogen related compound such as $C_3N_4$, N-doped carbon or N-doped Ru does not appear while heated under the nitrogen condition.

## Experimental Example 7: High-Resolution Photoemission Spectroscopy Analysis

High-resolution photoemission spectroscopy (HRPES) data were obtained using a 10A2 HRPES II beamline at the Pohang Accelerator Laboratory (PAL).

All HRPES spectra were recorded using a high-performance electron analyzer (SCIENTA2002, Sienta Omicron, Germany) at photon energies of 512 eV, 682 eV and 1150 eV in order to change the surface sensitivity in the energy unit of 0.02 eV with a passing energy of 50 eV.

Herein, the total spectral resolution of each photon energy was in the range of 0.12 eV to 0.15 eV determined by measuring Au Fermi-edge, and the HRPES binding energy was relatively corrected using binding energy of Au-based C 1s peak (284.6 eV) and Au 4f7/2 peak (84.0 eV) at the same photon energy. During the HRPES measurements, the pressure in the ultra-high vacuum (UHV) chamber was maintained at less than $1.0 \times 10^{-9}$ torr. All the HRPES spectra were measured in a normal emission mode, and analyzed using a standard nonlinear least square method having a Voigt function. In addition to the Voigt function, a Doniach-Sunjic function was additionally used in an asymmetry fitting analysis of the sp2-hybridized C 1s peak having an asymmetric parameter of 0.035 determined by highly oriented pyrolytic graphite (HOPG) as reported elsewhere.

FIG. 7a shows (a) HRPES spectra and (b) graphs of RuC ratio with respect to total Ru at different photon energies (PE) and probing depths ($3\lambda$) in the Ru $3d_{5/2}$ region of the nano-catalysts of Example 1 and Comparative Example 1.

The probing depths of the HRPES of C 1s and Ru 3d at different photon energies calculated using QUASES-IMFP-TPP2M database are shown in Table 1.

[Table 1]

| Photon Energy | Electron Inelastic Average Free Path ($\lambda$) | | Probing Depth ($3\lambda$) | |
|---|---|---|---|---|
| (PE, eV) | C 1s (nm) | Ru 3d (nm) | C 1s (nm) | Ru 3d (nm) |
| 512 | 1.048 | 0.560 | 3.144 | 1.680 |
| 682 | - | 0.768 | - | 2.304 |
| 1150 | - | 1.299 | - | 3.897 |

As in Experimental Example 3, the average particle size of the prepared nano-catalyst was about from 3 nm to 5.0 nm, and therefore, in the HRPES analysis, the HRPES spectrum mostly provides information on the exposed surface of the nanoparticles at the smallest probing depth, that is, about 1.7 nm, and provides information on the total nanoparticles at the largest probing depth, that is, about 3.9 nm.

In addition, HRPES peak positions and relative fractions of Ru at different photon energies of the nano-catalysts of Example 1 and Comparative Example 1 are shown in Table 2.

[Table 2]

| Type | | | $Ru^0$ | $RuC_x$ | $RuO_2$ |
|---|---|---|---|---|---|
| Binding Energy (eV) | | | 280.3 | 280.8 | 281.4 |
| Relative Fraction | Example 1 | 512 | 62.2 | 32.1 | 5.7 |
| | | 682 | 60.3 | 33.4 | 6.3 |
| (%) | | 1150 | 25.1 | 40.9 | 34.0 |
| | Comparative Example 1 | 512 | 87.4 | 12.6 | - |
| | | 682 | 80.0 | 20.0 | - |
| | | 1150 | 31.3 | 41.2 | 27.5 |

Referring to (a) of FIG. 7a, Ru $3d_{5/2}$ HRPES spectra of the nano-catalysts of Example 1 and Comparative Example 1 for three different chemical states of Ru assigned to $Ru^0$ (280.3 eV), $RuC_x$ (280.8 eV) and $RuO_2$ (281.4 eV) are shown. In addition, referring to (b) of FIG. 7a and Table 2, it can be identified that the nano-catalysts of Example 1 and Comparative Example 2 are respectively formed with 32.1% and 12.6% of the $RuC_x$ components at the 1.7 nm depth, and therefore, it can be identified that a large amount of $RuC_x$ is formed on the surface of the nano-catalyst of Example 1.

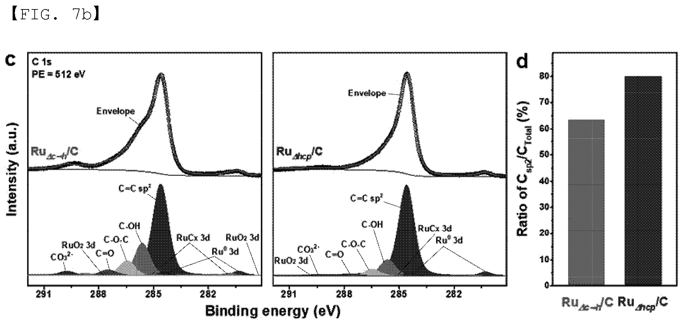

In addition, FIG. 7b shows (a) HRPES spectra and (b) graphs of the C $sp^2$ ratio with respect to total C at a photon energy (PE) of 512 eV in the C 1s region of the nano-catalysts of Example 1 and Comparative Example 1.

In addition, HRPES peak positions and relative fractions of C at different photon energies of the nano-catalysts of Example 1 and Comparative Example 1 are shown in Table 3.

[Table 3]

| Type | | C=C $sp^2$ | C-OH | C-O-C | C=O | O-C=O | $CO_3^{2-}$ |
|---|---|---|---|---|---|---|---|
| Binding Energy (eV) | | 284.6 | 285.6 | 286.5 | 287.5 | 288.7 | 289.8 |
| Relative Fraction (%) | Example 1 | 63.3 | 20.1 | 9.2 | 3.4 | 1.4 | 2.6 |
| | Comparative Example 1 | 80.0 | 12.9 | 5.3 | 1.1 | - | 0.7 |

Referring to FIG. 7b and Table 3, it can be identified that the C=C $sp^2$ fraction on the carbon surface of Example 1 is lower than that of Comparative Example 1.

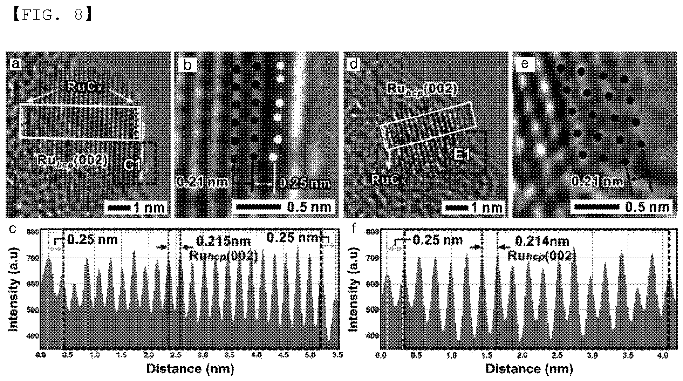

In addition, FIG. 8 shows (a) a high-resolution TEM image, (b) an enlarged view of the black dotted rectangular portion (C1) of (a), and (c) a distance-dependent intensity profile of the white solid rectangular portion of (a) of the nano-catalyst of Example 1, and shows (d) a high-resolution TEM image, (e) an enlarged view of the black dotted rectangular portion (E1) of (d), and (f) a distance-dependent intensity profile of the white solid rectangular portion of (d) of the nano-catalyst of Comparative Example 1. The block dots represent atoms having the hcp structure, and the white dots represent atoms on RuC.

Referring to (a) and (d) of FIG. 8, it can be identified that the increased lattice spacing of 0.25 nm of the HRTEM image may be due to the formation of $RuC_x$ or RuC (100) on the nano-catalyst surface of Example 1.

In addition, referring to (c) and (f) of FIG. 8 and Table 1, the $RuC_x$ component ratio of Example 1 did not increase much at the probing depth profile of 2.3 nm and 3.9 nm, and this indicates that the nano-catalyst surface of Example 1 is uniformly covered with $RuC_x$. However, in Comparative Example 1, the $RuC_x$ ratio rapidly increased from 20.0% to 41.2% at the same profile, indicating that $RuC_x$ covers only a portion of the nano-catalyst surface, and it can be identified that most of $RuC_x$ is formed at an interface between Ru and the carbon support.

**Experimental Example 8: Raman Spectrum**

Raman spectroscopy of the nano-catalysts of Preparation Example 1, Preparation Example 2, Reference Example, Example 1, Comparative Example 1 and Comparative Example 2 was measured with a power of 100 mW at room temperature using a 532 nm wavelength Nd:YAG laser through an XploRa Plus system (HORIBA, Japan).

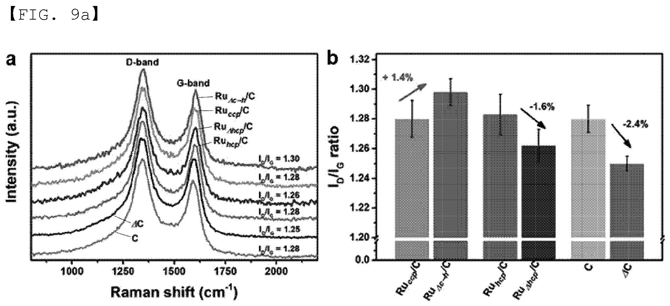

FIG. 9a shows (a) Raman spectra and (b) $I_D/I_G$ ratios of the nano-catalysts of Preparation Example 1, Preparation Example 2, Example 1 and Comparative Example 1. For reference, Raman spectra of the carbon support (C) and the carbon support after heat treating ($\triangle$C) the carbon support (C) in the same manner as in Example 1 are shown together.

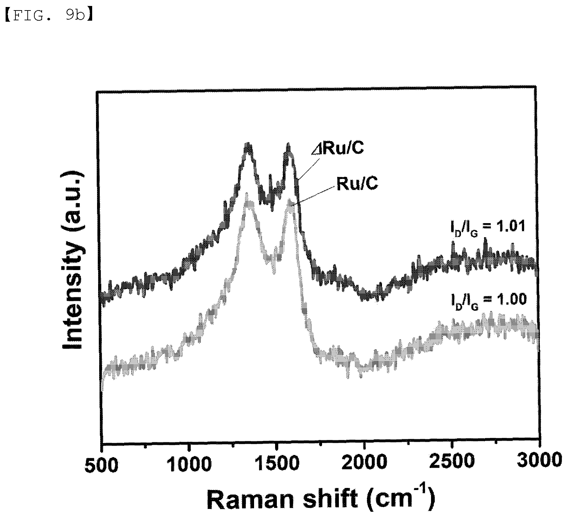

In addition, FIG. 9b shows Raman spectra of the nano-catalysts of Reference Example and Comparative Example 2.

In addition, Raman D band and G band positions, intensity ratio thereof ($I_D/I_G$), and changes before and after the annealing ($\triangle I_D/I_G$) of the nano-catalysts of Preparation Example 1, Preparation Example 2, Reference Example, Example 1, Comparative Example 1 and Comparative Example 2, the carbon support and the carbon support after heat treating ($\triangle$C) the carbon support in the same manner as in Example 1 are shown in Table 4.

[Table 4]

| Category | D-band ($cm^{-1}$) | G-band ($cm^{-1}$) | $I_D/I_G$ | $\triangle I_D/I_G$ (%) |
|---|---|---|---|---|
| Preparation Example 1 | 1345.7 | 1602.9 | 1.28 | 1.41 |
| Example 1 | 1346.0 | 1603.3 | 1.30 | |
| Preparation Example 2 | 1349.9 | 1603.4 | 1.28 | -1.66 |
| Comparative Example 1 | 1347.8 | 1603.4 | 1.26 | |
| C | 1343.0 | 1593.7 | 1.28 | -2.40 |
| $\triangle$C | 1341.9 | 1598.6 | 1.25 | |
| Reference Example | 1358.4 | 1592.4 | 1.01 | -1.00 |
| Comparative Example 2 | 1358.8 | 1594.8 | 1.00 | |

Referring to FIG. 9a, two representative peaks were displayed at about 1600 $cm^{-1}$ and 1350 $cm^{-1}$ in the Raman spectra, and these respectively correspond to aligned graphite structure-derived G-band and defect-derived D-band.

The G-band is an $E_{2g}$ mode having a stretching vibration of $sp^2$ C-C bond, and the D-band is associated with defects caused by disordered phase and lattice mismatch in the graphite layer. Accordingly, through the intensity ratio between the D-band and the G-band, the ratio of amorphous (defect) elements of aligned graphite may be identified.

Referring to Table 4, Comparative Example 1, Comparative Example 2 and $\triangle$C, which undergo annealing, have lower $I_D/I_G$ compared to Preparation Example 2, Reference Example and C by 1.7%, 1.0% and 2.4%, respectively, which represent higher carbon crystallinity. However, Example 1 has higher $I_D/I_G$ compared to Preparation Example 1 by 1.4%, indicating formation of bigger carbon defects during the annealing process, resultantly implying less graphite structure of carbon, and this also corresponds to the low C=C $sp^2$ concentration identified in FIG. 7b.

### Example 2

The nano-catalyst of Example 1 and 5 $\mu$L of Nafion (5% by weight in mixture of lower aliphatic alcohol and water, Aldrich) were introduced to a mixed solvent of 1 mL of water and 0.25 mL of isopropanol, and dispersed for 10 min by ultrasonication to prepare a catalyst dispersion. 10 $\mu$L of the prepared catalyst dispersion was coated on a glassy carbon electrode (GCE, 5 mm diameter, 0.196 $cm^2$), and dried for 30 min in a 60 °C oven to deposit a catalyst layer with a metal loading amount of 20.4 $\mu$g/$cm^2$, and as a result, a working electrode was prepared.

Hydrogen-saturated 0.5 M KOH was employed as an electrolyte, a Hg/HgO electrode was employed as a reference electrode, a graphite rod was employed as a counter electrode, and after forming a three-electrode cell using the working electrode prepared above, electrochemical measurements to describe later were performed at room temperature using a potentiometer (CHI 600E of CH Instruments and VSP of Bio-Logic). The measurements were corrected with respect to a reversible hydrogen electrode (RHE).

### Comparative Examples 3 to 7

Working electrodes were prepared and three-electrode cells were formed in the same manner as in Example 2 except that catalysts shown in Table 5 were prepared instead of the nano-catalyst of Example 1, and electrochemical measurements were performed thereon.

[Table 5]

| Working Electrode | Nano-Catalyst |
|---|---|
| Example 2 | Example 1 ($Ru_{\Delta c \to h}$/C) |
| Comparative Example 3 | Preparation Example 1 ($Ru_{ccp}$/C) |
| Comparative Example 4 | Preparation Example 2 ($Ru_{hcp}$/C) |
| Comparative Example 5 | Comparative Example 1 ($Ru_{\Delta hcp}$/C) |
| Comparative Example 6 | Reference Example (Ru/C) |
| Comparative Example 7 | Comparative Example 2 ($\Delta$Ru/C) |

### Experimental Example 9: Electrochemically Active Surface Area Measurement

The number of active sites on the catalyst surface was measured by copper underpotential deposition (UPD). Specifically, for the three-electrode systems of Example 2 and Comparative Examples 3 to 7, an electrolyte of 0.5 M $H_2SO_4$ or an electrolyte including 0.5 M $H_2SO_4$ and 0.005 M $CuSO_4$ was employed as the electrolyte, and a Cu UPD layer was formed by polarizing at 0.25 V for 100 s at a scan rate of 10 mV/s.

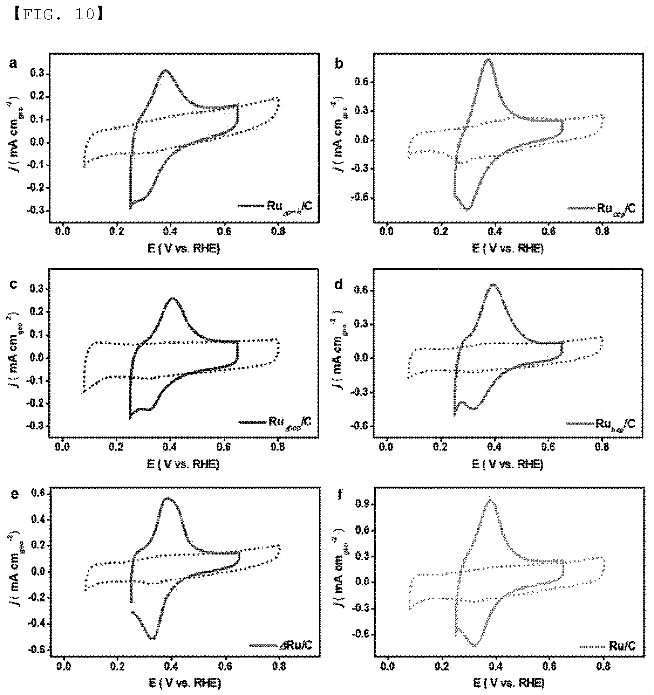

FIG. 10 shows the Cu UPD curves of Example 2 and Comparative Examples 3 to 7.

In this approach, the number of active sites may be calculated based on Cu UPD stripping charge ($Q_{Cu}$ (unit: C), Cu UPD->$Cu^{2+}$+2$e^-$) using the following equation.

$$n = Q_{Cu}/2F$$

In the equation, n means the number of active sites (mol), and F is a Faraday constant (C/mol).

The electrochemically active surface area (ECSA) was derived from charge related to stripping of Cu UPD, assuming 420 $\mu$C/$cm^2$ for the entire monolayer application of Cu on the outer surface of the nano-catalyst.

The ECSA of each of the nano-catalysts calculated using the data of FIG. 10 and the above-described equation was 27.92 $m^2$/g in Example 1, 60.20 $m^2$/g in Preparation Example 1, 60.58 $m^2$/g in Preparation Example 2, 23.00 $m^2$/g in Comparative Example 1, 86.15 $m^2$/g in Reference Example, and 56.17 $m^2$/g in Comparative Example 2. In other words, it can be identified that particle aggregation occurs through heat treatment, which causes a decrease in the outer surface area of the catalyst.

**Experimental Example 10: Measurement and Evaluation of Electrochemical properties of Hydrogen Generation Reaction**

With the three-electrode systems formed in Example 2 and Comparative Examples 3 to 7, electrochemical properties of the hydrogen generation reaction (HER) were measured. Specifically, a polarization curve was obtained using a linear sweep voltammetry (LSV) method at a scan rate of 5 mV/s, a Tafel plot using a Tafel equation ($\eta = b \cdot \log(j/j_0)$) based on the polarization curve was shown, and electrochemical impedance spectroscopy (EIS) was performed from 100 kHz to 0.1 Hz at a constant potential of -0.05 V with a direct current of 5 mV. In addition, the turnover frequency (TOF) was calculated using the following equation.

$$TOF = I/(2Fn)$$

In the equation, I means a current (A=C/s) during the linear sweep voltammetry measurement, F is a Faraday constant of 96485.33 C/mol, n means the number of active sites (mol), and 1/2 is a factor based on the consideration that two electrons are required to form one hydrogen molecule.

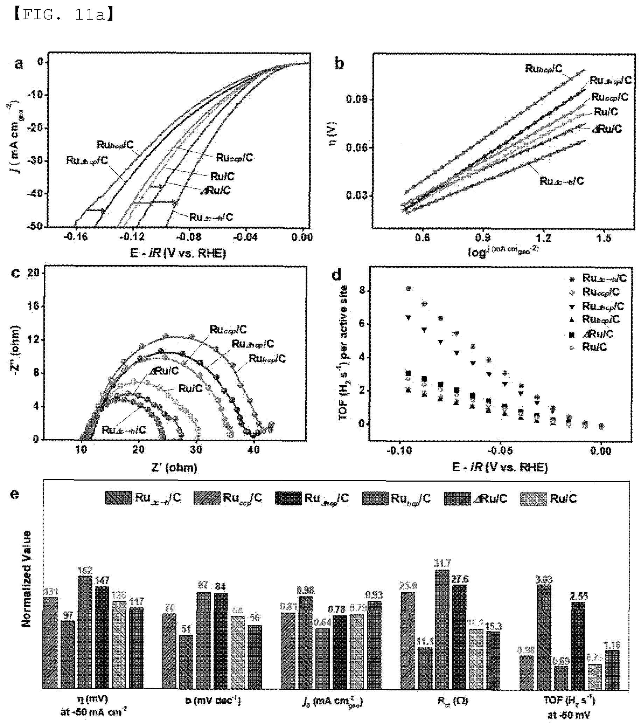

FIG. 11a shows (a) HER polarization curves (corrected based on geometric surface area using ECSA of Experimental Example 9), (b) Tafel plots derived from (a), (c) impedance spectra measured at a constant potential of -0.05 V, (d) graphs presenting a relationship between the turnover frequency and the measured potential, and (e) graphs comparing values of overpotential at 50 mA/cm$^2$, Tafel slope ($b$), exchange current density ($j_0$), charge transfer resistance ($R_{ct}$) and turnover frequency at -50 mV of Example 2 and Comparative Examples 3 to 7.

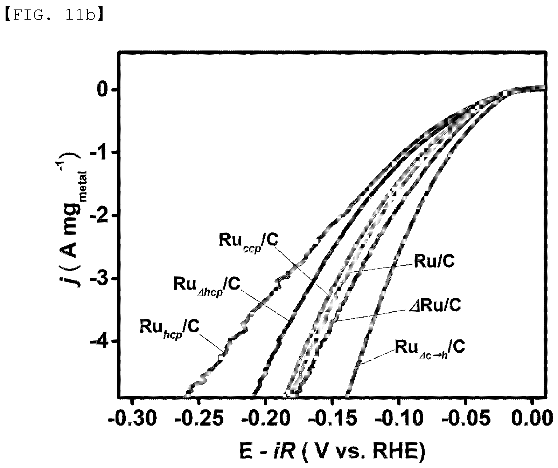

In addition, FIG. 11b shows HER polarization curves of Example 2 and Comparative Examples 3 to 7 (corrected based on Ru mass loaded into working electrode).

Referring to (a) of FIG. 11a, it can be identified that the overpotential ($\eta$) is 97 mV at current density of 50 mA/cm$^2$ in Example 2, which is a significantly lower overpotential compared to 131 mV in Comparative Example 3, 162 mV in Comparative Example 4, 147 mV in Comparative Example 5, 126 mV in Comparative Example 6 and 117 mV in Comparative Example 7.

In addition, referring to FIG. 11b, it can be identified that the HER mass activity in Example 2 is 2.55 A/mg at an overpotential of 100 mV, which is significantly higher compared to 1.42 A/mg in Comparative Example 3, 1.04 A/mg in Comparative Example 4, 1.17 A/mg in Comparative Example 5, 1.58 A/mg in Comparative Example 6 and 1.84 A/mg in Comparative Example 7.

Referring to (b) of FIG. 11a, the Tafel slope (b) was obtained in the linear portion of the low potential region of the LSV curve, and the exchange current density ($j_0$) was measured my extrapolating b to 0 $\eta$. It can be identified that the Tafel slopes are 51 mV/dec, 70 mV/dec, 84 mV/dec, 87 mV/dec, 56 mV/dec and 68 mV/dec in Example 2 and Comparative Examples 3 to 7, respectively. In other words, it can be identified that the Tafel slope in Example 2 is the smallest.

Referring to (a) and (e) of FIG. 11a, it can be identified that the exchange current density ($j_0$) is 0.98 mA/cm$^2$ in Example 2, which is also higher than 0.81 mA/cm$^2$ in Comparative Example 3, 0.64 mA/cm$^2$ in Comparative Example 4, 0.78 mA/cm$^2$ in Comparative Example 5, 0.79 mA/cm$^2$ in Comparative Example 6 and 0.93 mA/cm$^2$ in Comparative Example 7.

Referring to (c) of FIG. 11a, the charge transfer resistance ($R_{ct}$) corresponds to a diameter of a semicircle in the low frequency region of EIS, and this relates to electrocatalyst dynamics. The smallest $R_{ct}$ value in Example 2 represents the fastest electron migration between the Faraday process and the interface of the nano-catalyst of Example 1, and it can be identified that most superior HER performance is obtained compared to the nano-catalysts used in Comparative Example 3 to Comparative Example 7.

Referring to (d) of FIG. 11a, the turnover frequency (TOF) value is 3.03 H$_2$/s at an overpotential of 50 mV in Example 2, which is a higher value than 0.98 H$_2$/s in Comparative Example 3, 0.69 H$_2$/s in Comparative Example 4, 2.55 H$_2$/s in Comparative Example 5, 0.76 H$_2$/s in Comparative Example 6 and 1.16 H$_2$/s in Comparative Example 7. Such results indicate that improved HER activity does not depend on the ECSA value and is due to the catalyst surface structure.

**Experimental Example 11: Evaluation of Long-Term Durability**

For the working electrodes of Example 2 and Comparative Examples 3 to 7, 5000 cycles were performed in the range of 0.05 V to -0.15 V by cyclic voltammetry (CV) at a scan rate of 100 mV/s. After performing 5000 cycles, a polarization curve was derived using a linear sweep voltammetry method.

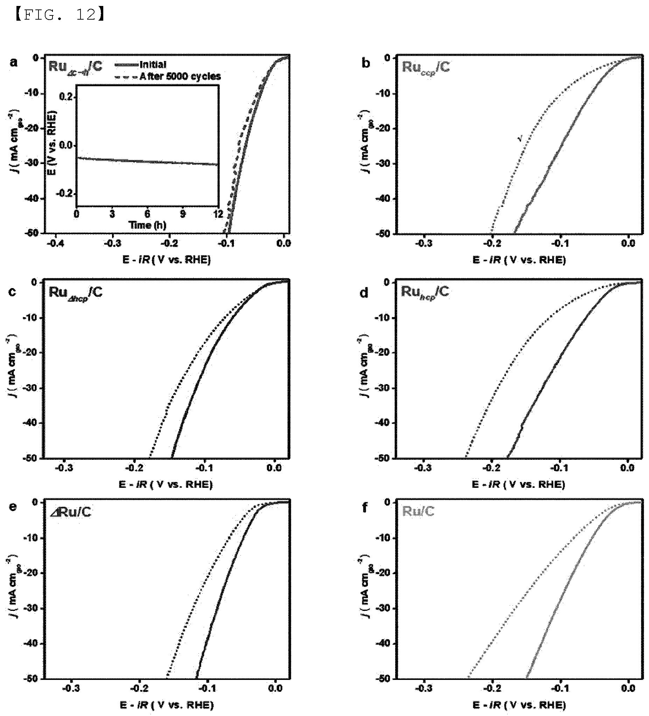

FIG. 12 shows HER polarization curves of the working electrodes of (a) Example 2, (b) Comparative Example 3, (c) Comparative Example 4, (d) Comparative Example 5, (e) Comparative Example 6 and (f) Comparative Example 7 before and after 5000 cycles. In addition, as an inset drawing of (a) of FIG. 12, chronopotentiometric data of the working electrode of Example 2 measured for 12 hours at current density of -10 mA/cm$^2$ in a 0.5 M KOH solution are shown.

Referring to FIG. 12, it can be identified that, in Example 2, similar performance is maintained before and after 5000 cycles, and the overpotential slightly increases by about 10 mV at 50 mA/cm$^2$. On the other hand, it can be identified that, in Comparative Examples 3 to 7, the overpotential significantly increases after 5000 cycles, and activity of the electrocatalyst is clearly reduced.

In addition, as shown in the inset drawing of (a) of FIG. 12, it can be identified that the electrode of Example 2 has a small drop in the operating potential even when it is driven for 12 hours, and may thereby be operated very stably in an alkaline medium.

## Experimental Example 12: Evaluation of HER Activity Under Acidic Atmosphere

For the three-electrode systems of Example 2 and Comparative Example 3, polarization curves were obtained using a linear sweep voltammetry method at a scan rate of 5 mV/s with an electrolyte of 0.5 M H$_2$SO$_4$. In addition, for reference, a case of using commercial Pt/C as the catalyst of the working electrode was also evaluated.

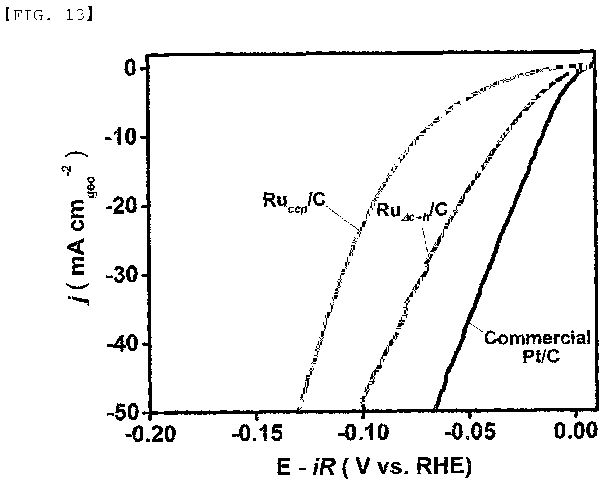

FIG. 13 shows polarization curves (corrected based on geometric surface area using ECSA of Experimental Example 9) of Example 2 and Comparative Example 3 in the H$_2$SO$_4$ electrolyte.

Referring to FIG. 13, it can be identified that the overpotential at 50 mA/cm$^2$ is 99 mV in Example 2, 130 mV in Comparative Example 3 and 66 mV in commercial Pt/C. This identifies that the electrode of Example 2 having weaker *H bond strength showed more superior HER activity under an acidic atmosphere than the electrode of Comparative Example 2 using the catalyst before annealing.

## Experimental Example 13: Evaluation of Surface Poisoning

For the three-electrode systems of Example 2 and Comparative Examples 3 to 5, KSCN was added to an argon-saturated 0.5 M KOH electrolyte so that the concentration became 5 mM, the result was kept for 30 min to poison the catalyst, and polarization curves were obtained using a linear sweep voltammetry method at a scan rate of 5mV/s.

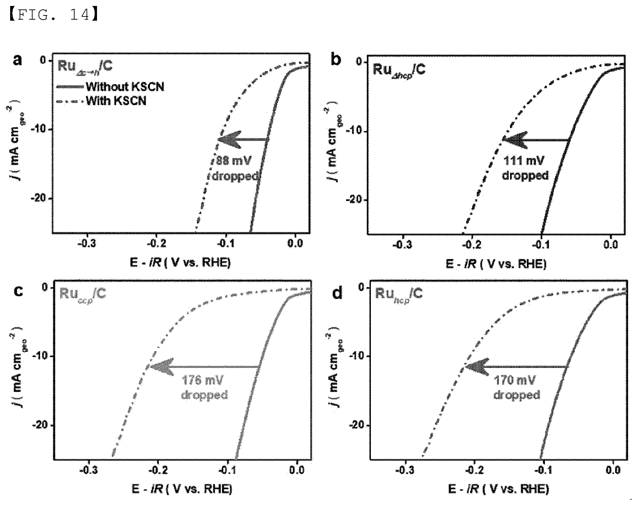

FIG. 14 shows polarization curves after poisoning the catalysts of (a) Example 2, (b) Comparative Example 3, (c) Comparative Example 4 and (d) Comparative Example 5.

Referring to FIG. 14, it can be identified that all the catalysts show a negative shift in the LSV curve since thiocyanate ions (SCN$^-$) contaminate the Ru metal site, and specifically, the overpotential shift value at 10 mA/cm$^2$ is 88 mV in Example 2, 111 mV in Comparative Example 5, 170 mV in Comparative Example 4 and 176 mV in Comparative Example 3. In other words, from the poisoning tendency of Example 2<Comparative Example 5<Comparative Example 4<Comparative Example 3, it can be identified that the RuC$_x$ phase included in the nano-catalyst of Example 1 and the nano-catalyst of Comparative Example 1, which are the catalysts of Example 2 and Comparative Example 5, may have a positive effect on the catalyst functioning, and such nanoparticles are not much affected by anion poisoning. In addition, the fact that Comparative Example 5 is more poisoned than Example 2 proves that the position of the RuC$_x$ phase on the nano-catalyst surface of Example 1 is different from the position of the nano-catalyst of Comparative Example 1, and RuC$_x$ is favorably formed on the nano-catalyst surface of Example 1.

## Experimental Example 14: Check of Mass Production Possibility

For Preparation Example 1 and Example 1, a nano-catalyst of Example 1-1 was prepared by increasing the amount of all materials used by 10 times. In addition, a three-electrode cell of Example 2-1 was formed in the same manner as in Example 2 using the nano-catalyst of Example 1-1.

For the nano-catalyst of Example 1-1 prepared as above, a TEM image was taken in the same manner as in Experimental Example 1 and an XRD pattern was observed in the same manner as in Experimental Example 2, and for the three-electrode cell of Example 2-1, a HER polarization curve was obtained in the same manner as in Experimental Example 10.

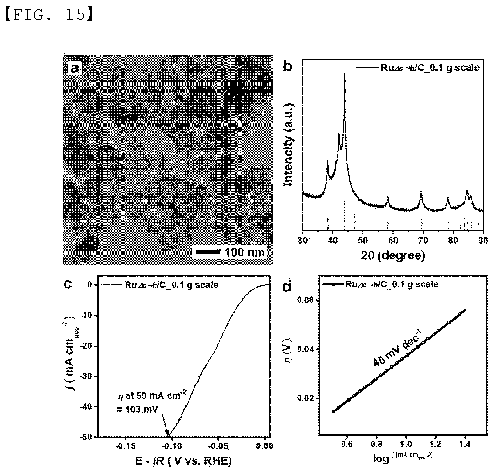

FIG. 15 shows (a) the TEM image of the nano-catalyst of Example 1-1, (b) the XRD pattern of the nano-catalyst of Example 1-1, (c) the HER polarization curve (corrected based on geometric surface area using ECSA of Experimental Example 9) of Example 2-1, and (d) a Tafel plot of Example 2-1 from (c).

Referring to FIG. 15, it can be identified that a catalyst form, a crystal structure and properties similar to those identified for Example 1 or 2 in Experimental Examples 1, 2 and 10 are obtained. In other words, from such results, it can be identified that the method for preparing the ruthenium-based nano-catalyst for a hydrogen generation reaction according to one embodiment of the present disclosure is capable of mass producing the nano-catalyst.

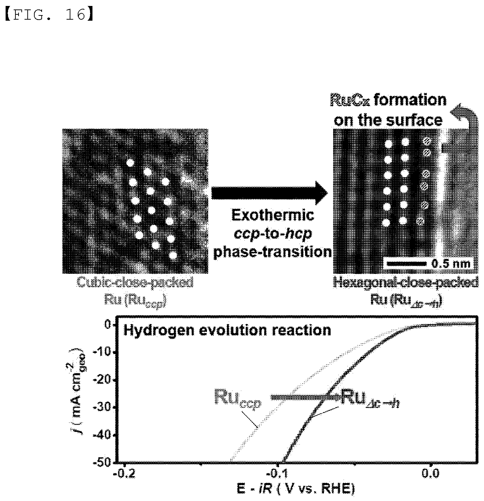

FIG. 16 is a diagram showing, by summarizing what is identified in Experimental Examples 5, 7 and 12, the crystal phase transition of ruthenium according to the method for preparing the ruthenium-based nano-catalyst for a hydrogen generation reaction according to one embodiment of the present disclosure and an improvement in the hydrogen generation reaction activity effect resulting therefrom.

Putting together FIG. 16 and the above-described experimental results and analyses, in the method for preparing the ruthenium-based nano-catalyst for a hydrogen generation reaction according to one embodiment of the present disclosure, a cubic-close-packed crystal structure is phase transformed to a hexagonal-close-packed crystal structure during the heat treatment process, and formation of ruthenium carbide due to the energy generated during such an exothermic phase transition process is identified, and accordingly, it can be identified that catalytic efficiency for a hydrogen generation reaction of the ruthenium-based nano-catalyst for a hydrogen generation reaction is particularly excellent in a alkaline electrolyte.

Hereinbefore, the present disclosure has been described with limited examples, however, the present disclosure is not limited thereto, and it is obvious that various changes and modifications may be made by those skilled in the art within technical ideas of the present disclosure and the range of equivalents of the claims to be described.

## Claims

1. A ruthenium-based nano-catalyst for a hydrogen generation reaction, the nano-catalyst comprising:

   a carbon support; and
   ruthenium nanoparticles having a hexagonal-close-packed (hcp) crystal structure loaded on the carbon support and including a ruthenium carbide layer on the outer surface.

2. The nano-catalyst of claim 1, wherein the ruthenium nanoparticles have an average size of 2 nm to 20 nm.

3. The nano-catalyst of claim 1, wherein the ruthenium carbide layer includes $RuC_x$ ($0<x\leq1$).

4. The nano-catalyst of claim 1, wherein, in a Raman spectrum of the ruthenium-based nano-catalyst for a hydrogen generation reaction, $I_D/I_G$ is from 1.30 to 1.50.

5. The nano-catalyst of claim 1, wherein the ruthenium-based nano-catalyst for a hydrogen generation reaction has a hydrogen generation reaction overpotential of 50 mV to 115 mV at current density of 50 mA/cm$^2$.

6. The nano-catalyst of claim 1, wherein the ruthenium-based nano-catalyst for a hydrogen generation reaction has hydrogen generation reaction activity of 2.00 A/mg to 3.00 A/mg per ruthenium mass at an overpotential of 100 mV.

7. The nano-catalyst of claim 1, wherein the ruthenium-based nano-catalyst for a hydrogen generation reaction has a hydrogen generation reaction turnover frequency (TOF) of 1.5 H$_2$/s to 5.0 H$_2$/s at an overpotential of 50 mV.

8. A method for preparing the ruthenium-based nano-catalyst for a hydrogen generation reaction of claim 1, the method comprising:

   stirring a dispersion including a solvent, a ruthenium precursor and a carbon support to prepare a nano-catalyst precursor in which ruthenium nanoparticles having a cubic-close-packed (ccp) crystal structure are loaded on the carbon support; and
   heat treating the nano-catalyst precursor to phase transform the ruthenium nanoparticles having a cubic-close-packed crystal structure to a hexagonal-close-packed (hcp) crystal structure.

9. The method of claim 8, wherein the ruthenium precursor includes ruthenium acetylacetonate.

10. The method of claim 8, wherein the solvent includes a glycol-based solvent.

11. The method of claim 10, wherein the glycol-based solvent includes one or more types of triethylene glycol, ethylene glycol, tetraethylene glycol and diethylene glycol.

12. The method of claim 8, wherein the dispersion includes the ruthenium precursor in an amount of greater than 0 mg and less than or equal to 10 mg with respect to 1 ml of the solvent.

13. The method of claim 8, wherein the ruthenium precursor and the carbon support have a weight ratio of 1:0.01 to 1:3.

14. The method of claim 8, wherein the stirring is performed for 5 hours to 10 hours at a temperature of 100°C to 300°C.

15. The method of claim 8, wherein the heat treatment is performed for 2 hours to 4 hours at a temperature of 300°C to 1000°C.

16. A hydrogen generation electrode comprising the ruthenium-based nano-catalyst for a hydrogen generation reaction of claim 1.

17. A water electrolysis system comprising the hydrogen generation electrode of claim 16.

18. The water electrolysis system of claim 17, further comprising an alkaline electrolyte.

【FIG. 1a】

【FIG. 1b】

【FIG. 1c】

【FIG. 2a】

【FIG. 2b】

【FIG. 3a】

【FIG. 3b】

【FIG. 4】

【FIG. 5】

【FIG. 6a】

【FIG. 6b】

【FIG. 7a】

【FIG. 7b】

【FIG. 8】

【FIG. 9a】

【FIG. 9b】

【FIG. 10】

【FIG. 11a】

【FIG. 11b】

【FIG. 12】

【FIG. 13】

【FIG. 14】

【FIG. 15】

【FIG. 16】

## INTERNATIONAL SEARCH REPORT

International application No.

**PCT/KR2022/011176**

### A. CLASSIFICATION OF SUBJECT MATTER

**B01J 27/22**(2006.01)i; **B01J 23/46**(2006.01)i; **B01J 21/18**(2006.01)i; **B01J 35/02**(2006.01)i; **B01J 35/00**(2006.01)i; **B01J 37/04**(2006.01)i; **B01J 37/08**(2006.01)i; **C25B 1/04**(2006.01)i; **C25B 11/081**(2021.01)i

According to International Patent Classification (IPC) or to both national classification and IPC

### B. FIELDS SEARCHED

Minimum documentation searched (classification system followed by classification symbols)

B01J 27/22(2006.01); B01J 23/46(2006.01); B01J 37/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 수소발생반응(hydrogen evolution reaction), 루테늄(ruthenium), 결정구조 상전이(crystal phase transition), 탄소 지지체(carbon support)

### C. DOCUMENTS CONSIDERED TO BE RELEVANT

| Category* | Citation of document, with indication, where appropriate, of the relevant passages | Relevant to claim No. |
|---|---|---|
| X | ZHENG, Yao et al. High Electrocatalytic Hydrogen Evolution Activity of an Anomalous Ruthenium Catalyst. Journal of the American Chemical Society. 2016, vol. 138, pp. 16174-16181. | 1-7,16-18 |
| A | See abstract; and pages 16175-16176 and 16178. | 8-15 |
| A | YANG, Yingjie et al. Engineering Ruthenium-Based Electrocatalysts for Effective Hydrogen Evolution Reaction. Nano-Micro Letters. 2021 (online publication date: 24 July 2021), vol. 13, pp. 1-20. See entire document. | 1-18 |
| A | MO, Shaolan et al. Atomic interface engineering: Strawberry-like RuO2/C hybrids for efficient hydrogen evolution from ammonia borane and water. International Journal of Hydrogen Energy. 2021 (online publication date: 08 May 2021), vol. 46, pp. 22397-22408. See entire document. | 1-18 |
| A | KWEON, Do Hyung et al. Ruthenium anchored on carbon nanotube electrocatalyst for hydrogen production with enhanced Faradaic efficiency. Nature Communications. 2020, vol. 11, pp. 1-10. See entire document. | 1-18 |

☑ Further documents are listed in the continuation of Box C.     ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 November 2022** | **11 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/011176** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2012-0102984 A (SEOUL NATIONAL UNIVERSITY R&DB FOUNDATION) 19 September 2012 (2012-09-19)<br>See entire document. | 1-18 |
| PX | KIM, Jeonghyeon et al. Crystal Phase Transition Creates a Highly Active and Stable RuCX Nanosurface for Hydrogen Evolution Reaction in Alkaline Media. Advanced Materials. 05 October 2021, vol. 33, no. 48, abstract.<br>See abstract; and supporting information pages 15, 18 and 31. | 1,3-4,6,8-15 |

Form PCT/ISA/210 (second sheet) (July 2022)

**INTERNATIONAL SEARCH REPORT**
Information on patent family members

International application No.

**PCT/KR2022/011176**

| Patent document cited in search report | Publication date (day/month/year) | Patent family member(s) | Publication date (day/month/year) |
|---|---|---|---|
| KR 10-2012-0102984 A | 19 September 2012 | KR 10-1186886 B1 | 02 October 2012 |

Form PCT/ISA/210 (patent family annex) (July 2022)

**EP 4 382 202 A1**

REFERENCES CITED IN THE DESCRIPTION

**Patent documents cited in the description**

- KR 1020210101415
- KR 1020220037212